# EUROPÄISCHE PATENTSCHRIFT

(11) **EP 1 755 890 B1**
(45) Veröffentlichungstag und Bekanntmachung des Hinweises auf die Patenterteilung: **10.09.2008**
(21) Anmeldenummer: 05756778.6
(22) Anmeldetag: 09.06.2005
(51) Int. Cl.: B32B 27/34, B32B 27/08, B32B 27/30, B32B 7/12, C09J 133/06, C09J 133/14, C09J 145/00

(54) **MEHRSCHICHTFOLIE**
MULTILAYER FOIL
FEUILLE MULTICOUCHE

(30) Priorität: 16.06.2004 DE 102004029217
(43) Veröffentlichungstag der Anmeldung: 28.02.2007
(73) Patentinhaber: Evonik Degussa GmbH, 45128 Essen (DE)
(72) Erfinder: WURSCHE, Roland, 48249 Dülmen (DE); BOLLMANN, Sonja, 45721 Haltern am See (DE); WIELPÜTZ, Martin, 48145 Münster (DE); ALTING, Kirsten, 48159 Münster (DE); HÄGER, Harald, 59348 Lüdinghausen (DE)
(86) Internationale Anmeldenummer: PCT/EP2005/052675
(87) Internationale Veröffentlichungsnummer: WO 2005/123384

(56) Entgegenhaltungen:
- EP-A- 0 601 752
- EP-A- 0 847 852
- US-A- 4 301 216

## Beschreibung

Die vorliegende Erfindung hat eine Mehrschichtfolie zum Gegenstand, die mindestens eine Schicht aus einem Polyamid (PA) sowie einen speziellen Haftvermittler enthält und die zur Verbindung mit ABS als Substratmaterial geeignet ist.

Das derzeitige Standardverfahren zur Dekoration von Außenflächen an Automobilen ist das Lackieren. Diese Vorgehensweise verursacht jedoch zum einen hohe Fertigungskosten, die durch die Vorhaltung eines spezifischen Maschinenparks und den verbundenen Bedienaufwand beim Automobilhersteller bedingt sind, zum anderen wird hierdurch die Umwelt belastet Eine Umweltbelastung resultiert beispielsweise aus freiwerdenden Lösungsmittelbestandteilen der eingesetzten Lacke sowie aus dem Anfall von Farbresten, die einer geordneten Entsorgung zugeführt werden müssen.

Ferner kommt hinzu, dass das Lackieren nur in begrenztem Maße geeignet ist, die Oberflächen von Kunststoffbauteilen zu dekorieren, die in den letzten Jahren im Automobilbau wegen der Gewichts- und Kostenersparnis an Beliebtheit gewonnen haben.

Der Lackierprozess von Kunststoffbauteilen als Komponenten der Karosserie ist beispielsweise on-line führbar, wobei das Kunststoffteil der gleichen Lackierbehandlung unterzogen wird wie die metallischen Komponenten. Dies führt zu einer einheitlichen Farbe, bringt aber infolge der hier üblichen kathodischen Tauchlackierung hohe Temperaturen mit sich, die die Materialauswahl erschweren. Außerdem muss eine Haftung der Lackrezeptur in gleicher Weise auf den sehr unterschiedlichen Substraten gewährleistet sein. Wird der Lackierprozess der Kunststoffteile in einem separaten Schritt (sogenannte off-line-Lackierung) durchgeführt, der für Kunststoffe günstigere Prozessbedingungen beinhaltet, tritt die Problematik des colormatching auf, das heißt, der am Metall realisierte Farbton muss genau getroffen werden. Dies ist jedoch aufgrund der Unterschiede in Substrat, verwendbarer Basislackrezeptur und Prozessbedingungen sehr schwierig zu erreichen. Im Falle einer durch das Design vorgegebenen Farbdifferenz bleibt als gravierender Nachteil die Vorhaltung einer zweiten Lackiereinrichtung für die Kunststoffteile und der damit verbundene Aufwand, wobei auch ein zusätzlicher Zeitbedarf für die Fertigung des Automobils einzubeziehen ist. Die direkte Verwendung der unbehandelten, in der Regel spritzgegossenen Kunststoffteile ist unter ästhetischen Gesichtspunkten unvorteilhaft, da hier prozessbedingte Fehler der Oberfläche, wie etwa Bindenähte, Lufteinschlüsse, aber auch notwendige verstärkende Füllstoffe wie Glasfasern deutlich wahrnehmbar sind. Dies ist im Sichtbereich nicht tolerabel. Folglich muss eine Verbesserung der Oberflächenqualität vorgenommen werden, beispielsweise im Zuge einer Lackierung, wobei oft eine arbeitsintensive Vorbehandlung durch Schleifen und die Aufbringung eines Primers in dickeren Schichten nötig wird.

Ein Vorschlag zur Abhilfe besteht in der Verwendung von mehrschichtigen Kunststofffolien, die zur Abdeckung der Bauteile eingesetzt werden und nicht mehr lackiert werden müssen. Der Verbund zwischen Substrat und dekorierender Folie kann hierbei durch eine Reihe von Fertigungsverfahren realisiert werden. Die Folie kann beispielsweise mit dem Substrat verpresst werden oder man wählt ein Hinterspritzverfahren, bei dem die Folie bei der Bauteilherstellung in das Spritzgießwerkzeug eingelegt wird. Das Konzept einer Folie als Dekorträger kommt darüber hinaus einem Trend zur Individualisierung gestalterischer Elemente am Automobil entgegen. Diese Tendenz führt nämlich in der Fertigung zu einer größeren Palette von Modellen, die aber in der Anzahl der jeweils gefertigten Bauteile pro Serie reduziert ist. Da der Einsatz von Folien schnelle, problemlose Designwechsel erlaubt, kann dieser Herausforderung hiermit begegnet werden. Wichtig ist hierbei, dass durch die Folie die in der Automobilindustrie geforderten Standards hinsichtlich Oberflächeneigenschaften (Class A Oberfläche), Beständigkeit gegenüber Medien und optischem Eindruck erfüllt werden.

Derartige Dekorfolien sind im Prinzip bekannt. Die EP 0 949 120 A1 beispielsweise beschreibt Dekorfolien mit Polyalkylmethacrylat als Basisschicht, die auch zusätzlich eine substratseitige Stützschicht aus Polyamid enthalten können, während aus der WO 94/03337 Dekorfolien bekannt sind, deren Basisschicht aus einer Vielzahl alternativer Polymere, darunter auch Polyamid, bestehen kann.

Aufgrund ihres Eigenschaftsprofils, beispielsweise Schlagzähigkeit und Chemikalienbeständigkeit, sind Polyamide, insbesondere Polyamide auf Basis von PA12 oder PA612, für die Herstellung derartiger Dekorfolien gut geeignet Lacksysteme zeigen im Grundsatz eine Neigung zu sprödem Bruchverhalten. Wird ein in dieser Form dekoriertes Kunststoffbauteil einer Schlagbeanspruchung ausgesetzt, tritt eine Weiterleitung des Risses von der Lackschicht in das darunter liegende Substrat auf, was zu tieferreichenden Schäden führt. Durch den Einsatz insbesondere von kälteschlagzähen Materialien in einer das Substrat bedeckenden Dekorfolie wird hingegen eine Verletzung von Außenhaut und Substrat vermieden. Dabei ist zu berücksichtigen, dass im selben Zuge eine ausreichende Chemikalienbeständigkeit, insbesondere gegenüber Kraftstoffen, Ölen und Fetten, realisiert werden muss. Diese Anforderungen werden von Polyamiden wie beispielsweise PA 12, PA 11 oder PA 612 erfüllt. Polyamide, die aliphatische Strukturen enthalten, zeigen darüber hinaus ein günstiges UV-Alterungsverhalten. Dies bedeutet, dass eine nur geringe Vergilbungsneigung besteht, die im Laufe der Lebenszeit eines Automobils nicht zu unerwünschten Farbänderungen führen kann. Diese Kombination von Eigenschaften ist bei anderen Kunststoffen so nicht darstellbar. Neben günstigen Eigenschaften des dekorierten Formteils muss zudem auch die Eignung einer derartigen Folie im Hinblick auf ökonomisch vorteilhafte Verarbeitungsmethoden berücksichtigt werden. Hier ist bei Polyamiden das gute Verhalten beim Tiefziehen besonders hervorzuheben. Dies resultiert aus einer inhärent hohen Reißdehnung der Polyamidwerkstoffe, die sie von anderen Materialien positiv abhebt

Als Aufgabe im Gesamtzusammenhang der Anwendung stellt sich die Auffindung eines geeigneten Haftvermittlers, der die Anbindung der Polyamidschicht an das Substrat erlaubt. Ein häufig genutztes Substratmaterial ist ABS oder dessen Blend mit Polycarbonat (PC), das in manchen Fällen durch Glasfasern oder andere Füllstoffe verstärkt ist. Der Haftvermittler muss dafür geeignet sein, in einem Coextrusionsverfahren zu einer Schicht innerhalb einer Mehrschichtfolie verarbeitet zu werden. Der Verbund dieser Mehrschichtfolie mit dem Substratmaterial kann dann beispielsweise durch Hinterspritzen oder Verpressen hergestellt werden. Sowohl bei der Coextrusion zur Mehrschichtfolie als auch beim Hinterspritzen oder Verpressen gilt, dass hier erhöhte Anforderungen an die Haftfähigkeit des Haftvermittlers gestellt sind, da keine erzwungene Durchmischung der Komponenten stattfindet, die über kontinuierliche Oberflächenerneuerung eine vollständige Abreaktion reaktiver Gruppen an der Phasengrenzfläche ermöglicht. Zudem ist beispielsweise beim Hinterspritzen die Temperatur in der Kontaktzone der Fügepartner nur für kurze Zeit ausreichend hoch, um eine Verbundbildung zu erreichen. Die beiden vorgenannten Schriften bieten zur Lösung dieser Aufgabe keine Hilfestellung.

Die US 3 561 493 offenbart, dass zwei Schichten aus verschiedenen Polymeren durch eine Zwischenschicht, die aus einer Mischung dieser Polymeren besteht, mittels Coextrusion verbunden werden können. Diese Lehre ist aber nicht auf das System Polyamid/ABS übertragbar. Die Aussage der US 3 561 493 gilt nur für ein mehrschichtiges Rohrsystem, in welchem eine Polyethylenschicht mit einem PA 11 durch den Einsatz eines Blends aus beiden Materialien zur Haftung gebracht wird. Der Versuch, diese Lehre auf die Verbundbildung zwischen Polyamid oder einem hiervon abgeleiteten Polyetherblockamid und ABS zu übertragen, scheiterte, da sich keine Zusammensetzung finden ließ, die eine ausreichende, verlässliche Haftung zu beiden Materialien gewährleistete.

Weiterhin sind in der EP 0 322 558 A2 Blends aus amorphem Polyamid und ABS beschrieben. Die EP 0 601 752 A1 schildert die Verwendung dieser Blends als Haftvermittler für das System amorphes PA/ABS. Diese Haftvermittlercompounds können in coextrudierten Mehrschichtfolien zum Einsatz kommen. Versuche haben jedoch gezeigt, dass dieses Konzept bei semikzistailinen Polyamiden wie z. B. PA12 oder von PA12 abgeleitetem Polyetherblockamid (PEBA) nicht mit Erfolg angewandt werden kann, da durch derartig zusammengesetzte Blends im gewünschten Verbundsystem keine verlässliche Haftung zu beiden Materialien erzielt wird.

Die US 4 301 216 beschreibt Mehrschichtverbunde aus einer Polyamidschicht, einer ABS-Schicht und dazwischen einer Haftvermittlerschicht aus carboxyliertem SAN oder ABS. Derartige Haftvermittler sind jedoch nicht handelsüblich.

Es bestand folglich die Aufgabe, einen weiteren geeigneten coextrudierten Haftvermittler für die Anbindung von Polyamiden generell und insbesondere von Polyamiden auf Basis von PA12 an ABS zu entwickeln.
Diese und weitere, im Folgenden ersichtliche Aufgaben werden durch die Verwendung eines Haftvermittlers zur Herstellung eines Verbundes zwischen
I. einer Schicht aus einer Polyamidformmasse und
II. einem Teil aus einer ABS-Formmasse
gelöst, wobei der Haftvermittler 2 bis 100 Gew.-% eines Copolymeren enthält, das folgende Monomereinheiten enthält:
1. Etwa 70 bis etwa 99,9 Gew.-% an Monomereinheiten, die sich von vinylischen Verbindungen herleiten, die ausgewählt sind aus Acrylsäurederivaten und Methacrylsäurederivaten sowie
2. etwa 0,1 bis etwa 30 Gew.-% an Monomereinheiten, die eine funktionelle Gruppe enthalten, die ausgewählt ist aus einer Carbonsäureanhydridgruppe, einer Epoxidgruppe und einer Oxazolingruppe.

Das Polyamid der Schicht gemäß I. unterliegt keiner Einschränkung. In erster Linie kommen hierbei aliphatische Homo- und Copolykondensate in Frage, beispielsweise PA46, PA66, PA88, PA610, PA612, PA810, PA1010, PA1012, PA1212, PA6, PA7, PA8, PA9, PA10, PA 11 und PA 12. (Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, dass von einer α,ω-Aminocarbonsäure bzw. von dem davon abgeleiteten Lactam ausgegangen worden ist; im übrigen sei verwiesen auf H. Domininghaus, Die Kunststoffe und ihre Eigenschaften, Seiten 272 ff., VDI-Verlag, 1976.)

Sofern Copolyamide verwendet werden, können diese z. B. Adipinsäure, Sebacinsäure, Korksäure, Isophthalsäure, Terephthalsäure, Naphthalin-2.6-dicarbonsäure usw. als Cosäure bzw. Bis(4-aminocyclohexyl)methan, Trimethylhexamethylendiamin, Hexamethylendiamin oder ähnliches als Codiamin enthalten. Lactame wie Caprolactam oder Laurinlactam bzw. Aminocarbonsäuren wie ω-Aminoundecansäure können als Cokomponente ebenfalls eingebaut sein.

Die Herstellung dieser Polyamide ist bekannt (z. B. D. B. Jacobs, J. Zimmermann, Polymerization Processes, S. 424 - 467, Interscience Publishers, New York, 1977; DE-AS 21 52 194).

Darüber hinaus sind als Polyamide auch gemischte aliphatisch/aromatische Polykondensate geeignet, wie sie z. B. in den US-PSS 2 071 250, 2 071 251, 2 130 523, 2 130 948, 2 241 322, 2 312 966, 2 512 606 und 3 393 210 sowie in Kirk-Othmer, Encyclopedia of Chemical Technology, 3. Aufl., Vol. 18, Seiten 328 ff. und 435 ff., Wiley & Sons, 1982, beschrieben werden. Weitere geeignete Polyamide sind Poly(etheresteramide) bzw. Poly(etheramide); derartige Produkte werden z. B. in den DE-OSS 25 23 991, 27 12 987 und 30 06 961 beschrieben.

Die Polyamidformmasse kann entweder eines dieser Polyamide oder mehrere als Gemisch enthalten. Weiterhin können bis zu 40 Gew.-% andere Thermoplaste enthalten sein, sofern diese die Verbundfähigkeit nicht stören, insbesondere schlagzähmachende Kautschuke wie Ethylen/Propylen- oder Ethylen/Propylen/Dien-Copolymere (EP-A-0295076), Poly-pentenylen, Polyoctenylen, statistische bzw. blockartig aufgebaute Copolymere aus alkenylaromatischen Verbindungen mit aliphatischen Olefinen oder Dienen (EP-A-0 261 748) oder Kern/Schale-Kautschuke mit einem zähelastischen Kern aus (Meth)Acrylat-, Butadien- oder Styrol/Butadien-Kautschuk mit Glastemperaturen Tg< -10 °C, wobei der Kern vernetzt sein kann und die Schale aus Styrol und/oder Methylmethacrylat und/oder weiteren ungesättigten Monomeren aufgebaut sein kann (DE-OSS 21 44 528, 37 28 685).

Der Polyamidformmasse können die für Polyamide üblichen Hilfs- und Zusatzstoffe wie z. B. Flammschutzmittel, Stabilisatoren, Weichmacher, Verarbeitungshilfsmittel, Füllstoffe, insbesondere zur Verbesserung der elektrischen Leitfähigkeit, Verstärkungsfasern, Pigmente oder ähnliches zugefügt werden. Die Menge der genannten Mittel ist so zu dosieren, dass die gewünschten Eigenschaften nicht ernsthaft beeinträchtigt werden.

In einer bevorzugten Ausführungsform besitzen die Monomereinheiten des Polyamids, die sich von Diamin, Dicarbonsäure bzw. Lactam (oder Aminocarbonsäure) herleiten, im Durchschnitt mindestens 8 C-Atome und besonders bevorzugt mindestens 9 C-Atome.

Die Schicht aus der Polyamidformmasse kann nach allen technisch gebräuchlichen Methoden hergestellt werden, besonders vorteilhaft durch Extrusion bzw. Coextrusion.

ABS-Polymere sind seit langem Stand der Technik und in Form vieler Handelstypen verfügbar. Sie sind im wesentlichen aus Acrylnitril, Butadien und Styrol zusammengesetzt; dieses Dreimonomersystem kann in großem Umfang variiert werden, um die jeweiligen Anforderungen zu erfüllen. Das Polymere enthält Ketten aus Polybutadien, Polyisopren, Acrylnitril-Butadien-Kautschuk (NBR), Styrol-Butadien-Kautschuk (SBR) oder dergleichen, auf die Styrol oder bevorzugt ein Styrol-Acrylnitril-Gemisch aufgepfropft wurde; das Gemisch kann zusätzlich auch andere Comonomere wie z. B. Methylmethacrylat enthalten.

In typischen Fällen liegt hierbei der Kautschukanteil bei 5 bis 30 Gew.-%; die Matrix aus Styrol-Acrylnitril-Copolymer enthält üblicherweise 10 bis 45 Gew.-% und insbesondere 15 bis 35 Gew.-% Acrylnitril. Herstellungsbedingt ist zumindest ein Teil dieses Copolymers auf den Kautschuk aufgepfropft, während der Rest in freier Form vorliegt.

Die ABS-Formmasse kann die üblichen Additive enthalten wie z. B. Weichmacher, Verarbeitungshilfsmittel, Flammschutzmittel, Stabilisatoren, Antistatika, Füllstoffe, Pigmente und Verstärkungsmittel. Daneben kann die ABS-Formmasse weitere Thermoplaste als Bestandteile enthalten, etwa Polycarbonate, Polyamide oder Polyester.

Ein aus dieser ABS-Formmasse bestehendes Teil wird im Rahmen der Erfindung mit der Schicht aus einer Polyamidformmasse verbunden. Dieses Teil kann flächig ausgeformt sein, wie etwa ein Karosserieteil eines Automobils, beispielsweise Dachmodul, Kotflügel, Motorhaube oder Tür. Daneben sind auch Ausführungsformen vorteilhaft, in denen längliche, mehr oder weniger gewölbte Bauteile erzeugt werden, etwa Verkleidungen, beispielsweise die Verkleidung sogenannter A-Säulen am Automobil oder Zier- und Blendleisten aller Art. Ein weiteres Beispiel sind Schutzverkleidungen für Türschwellen. Neben Anwendungen im Außenbereich des Automobils können auch Bestandteile des Interieurs vorteilhaft durch die erfindungsgemäßen Folien dekoriert werden, insbesondere Zierelemente wie Leisten und Blenden, da auch im Innenraum Schlagzähigkeit und Beständigkeit gegenüber Chemikalien, beispielsweise Reinigungsmitteln, erforderlich ist Über einen Einsatz im Automobil hinaus sind die aufgeführten Konstruktionen natürlich generell geeignet, für Dekorationselemente jeglicher Art in Außen- wie Innenanwendungen eingesetzt zu werden. In allen diesen Fällen bildet das Teil aus der ABS-Formmasse das Substrat, das mit der Mehrschichtfolie verbunden wird, oder es kann eine Schicht dieser Folie bilden, die dazu bestimmt ist, ihrerseits mit einem aus einer ABS-Formmasse bestehenden Substrat verbunden zu werden.
Der Haftvermittler enthält als wirksames Agens 2 bis 100 Gew.-%, bevorzugt 3 bis 80 Gew.%, besonders bevorzugt 4 bis 60 Gew.-% und insbesondere bevorzugt 5 bis 40 Gew.-% eines Copolymeren, das bevorzugt folgende Monomereinheiten enthält:
1. Etwa 70 bis etwa 99,9 Gew.-%, bevorzugt 80 bis 99,4 Gew.-% und besonders bevorzugt 85 bis 99 Gew.-% an Monomereinheiten, die ausgewählt sind aus Einheiten folgender Formeln. 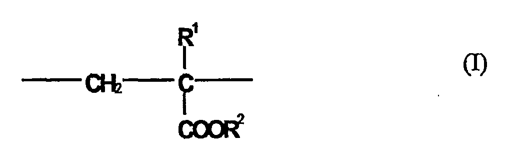 mit R¹ = H oder CH₃ und R² = H, Methyl, Ethyl, Propyl oder Butyl; 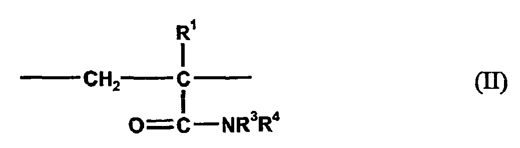 mit R¹ wie oben und R³ und R⁴, unabhängig voneinander, gleich H, Methyl oder Ethyl; 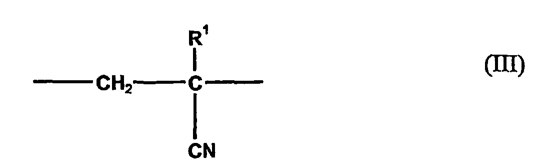 mit R¹ wie oben; 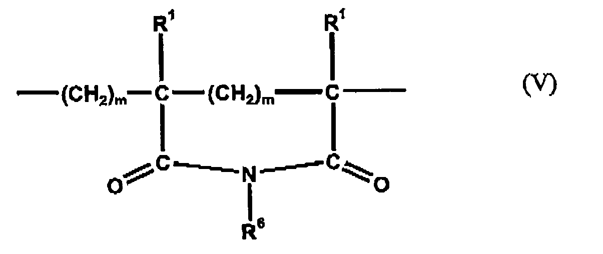 mit R¹ wie oben und R⁶ = H, Methyl, Ethyl, Propyl, Butyl oder Phenyl und m = 0 oder 1;
2. etwa 0,1 bis etwa 30 Gew.-%, bevorzugt 0,6 bis 20 Gew.-% und besonders bevorzugt 1 bis 15 Gew.-% an Monomereinheiten, die ausgewählt sind aus Einheiten folgender Formeln: 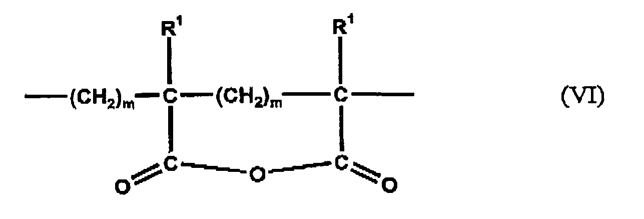 mit R¹ und m wie oben; 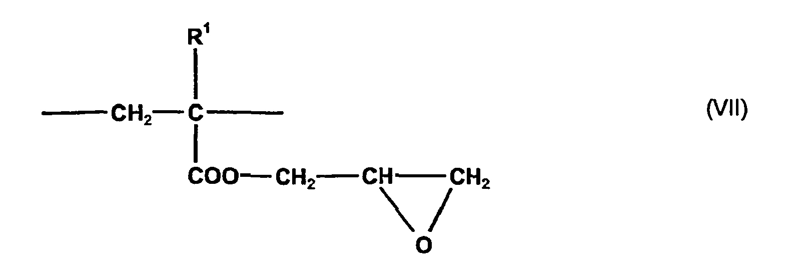 mit R¹ wie oben; 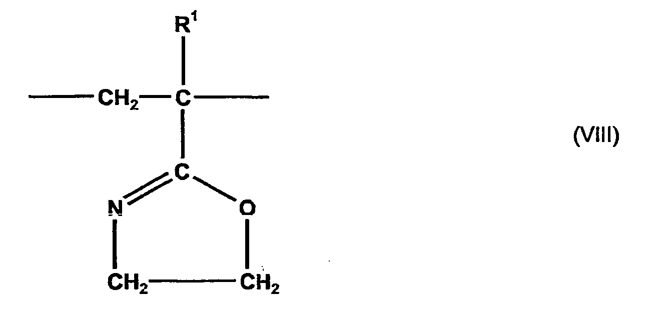 mit R¹ wie oben.

Die Limitierung der Kettenlänge bei den Substituenten R¹ bis R⁶ ist darin begründet, dass längere Alkylreste zu einer erniedrigten Glasübergangstemperatur und damit zu einer verringerten Wärmeformbeständigkeit führen. Dies mag im Einzelfall in Kauf genommen werden; derartige Ausführungsformen liegen zumindest im Äquivalenzbereich der Erfindung.

Die Einheiten der Formel (I) leiten sich beispielsweise von Acrylsäure, Methacrylsäure, Methylacrylat, Ethylacrylat, n-Butylacrylat, Methylmethacrylat, n-Propylmethacrylat oder i-Butylmethacrylat her.

Die Einheiten der Formel (II) leiten sich beispielsweise von Acrylamid, Methacrylamid, N-Methylacrylamid, N-Methylmethacrylamid oder N,N-Dimethylacrylamid her.

Die Einheiten der Formel (III) leiten sich von Acrylnitril oder Methacrylnitril her.

Die Einheiten der Formel (V) leiten sich im Falle m = 0 von gegebenenfalls substituierten Maleinimide her wie Maleinimid, N-Methylmaleinimid, N-Ethylmaleinimid, N-Phenylmaleinimid oder N-Methylaconitsäureimid. Im Falle m = 1 leiten sie sich durch Umsetzung zweier in einem Polymeren benachbarter Einheiten der Formel (I) mit Ammoniak oder einem primären Amin unter Imidbildung her.

Die Einheiten der Formel (VI) leiten sich im Falle m = 0 von gegebenenfalls substituierten Maleinsäureanhydriden her wie Maleinsäureanhydrid oder Aconitsäureanhydrid. Letztere können ganz oder teilweise durch andere ungesättigte Säureanhydride wie z. B. Itaconsäureanhydrid ersetzt werden, die gleichwirkend sind. Im Falle m = 1 leiten sie sich durch Wasserabspaltung aus zwei in einem Polymeren benachbarten Einheiten der Formel (I) (R² = H) unter Ringschluss her.

Die Einheiten der Formel (VII) leiten sich von Glycidylacrylat oder Glycidylmethacrylat her und die Einheiten der Formel (VIII) von Vinyloxazolin oder Isopropenyloxazolin.

Vom Copolymeren sind verschiedene Ausgestaltungen bevorzugt, die folgende Einheiten enthalten:
A. 14 bis 96 Gew.-%, bevorzugt 20 bis 85 Gew.-% und besonders bevorzugt 25 bis 75 Gew.-% Einheiten der Formel (I), wobei R² nicht H ist;
   0 bis 75 Gew.-%, bevorzugt 1 bis 60 Gew.-% und besonders bevorzugt 5 bis 40 Gew.-% Einheiten der Formel (V) mit m = 1;
   0 bis 15 Gew.-%, bevorzugt 0 bis 10 Gew.-% und besonders bevorzugt 0,1 bis 7 Gew.-% Einheiten der Formel (I) mit R² = H;
   0,1 bis 30 Gew.-%, bevorzugt 1 bis 20 Gew.-% und besonders bevorzugt 2 bis 15 Gew.-% Einheiten der Formel (VI) mit m = 1.
   Bei Anwesenheit von Einheiten der Formel (V) werden derartige Copolymere als Polyacrylimide bzw. Polymethacrylimide oder manchmal auch als Polyglutarimide bezeichnet. Es handelt sich hierbei um Produkte ausgehend von Polyalkylacrylaten bzw. Polyalkylmethacrylaten, bei denen zwei benachbarte Carboxylatgruppen zu einem cyclischen Säureimid umgesetzt worden sind. Die Imidbildung wird vorzugsweise mit Ammoniak bzw. primären Aminen, wie z. B. Methylamin, in Gegenwart von Wasser durchgeführt, wobei die Einheiten der Formel (VI) und ggf. Einheiten der Formel (I) mit R² = H durch Hydrolyse mit entstehen. Die Produkte sowie ihre Herstellung sind bekannt (Hans R. Kricheldorf, Handbook of Polymer Synthesis, Part A, Verlag Marcel Dekker Inc. New York-Basel-Hongkong, S. 223 f, H. G. Elias, Makromoleküle, Hüthig und Wepf Verlag Basel-Heidelberg-New York; US 2 146 209 A; US 4 246 374). Setzt man nur mit Wasser um, so erhält man Einheiten der Formel (VI) sowie ggf. saure Einheiten (I) durch Hydrolyse, ohne dass Imideinheiten (VI) gebildet werden.
B. 70 bis 99,9 Gew.-%, bevorzugt 80 bis 99,4 Gew.-% und besonders bevorzugt 85 bis 99 Gew.-% Einheiten der Formel (I);
   0,1 bis 30 Gew.-%, bevorzugt 0,6 bis 20 Gew.-% und besonders bevorzugt 1 bis 15 Gew.-% an Einheiten der Formel (VI) mit m = 0.
   Derartige Copolymere sind auf bekannte Weise durch radikalisch initiierte Copolymerisation von Acrylsäure, Methacrylsäure und/oder deren Estern, gegebenenfalls aliphatisch ungesättigten Aromaten sowie ungesättigten Carbonsäureanhydriden zugänglich.
C. 0,1 bis 99,7 Gew.-%, bevorzugt 2 bis 99,3 Gew.-% und besonders bevorzugt 5 bis 98 Gew.-% Einheiten der Formel (I);
   0,1 bis 45 Gew.-%, bevorzugt 1 bis 40 Gew.-% und besonders bevorzugt 2 bis 35 Gew.-% Einheiten der Formel (III);
   0,1 bis 30 Gew.-%, bevorzugt 0,6 bis 20 Gew.-% und besonders bevorzugt 1 bis 15 Gew.-% Einheiten der Formel (VI) mit m = 0.
   Derartige Copolymere sind auf bekannte Weise durch radikalisch initiierte Copolymerisation von Acrylsäure, Methacrylsäure und/oder deren Estern, Acryl- bzw. Methacrylnitril und ungesättigten Carbonsäureanhydriden zugänglich.
D. 70 bis 99,9 Gew.-%, bevorzugt 80 bis 99,4 Gew.-% und besonders bevorzugt 85 bis 99 Gew.-% Einheiten ausgewählt aus den Formeln (I), wobei R² nicht H ist, und (III),
   0,1 bis 30 Gew.-%, bevorzugt 0,6 bis 20 Gew.-% und besonders bevorzugt 1 bis 15 Gew.-% Einheiten der Formel (VII).
E. 70 bis 99,9 Gew.-%, bevorzugt 80 bis 99,4 Gew.-% und besonders bevorzugt 85 bis 99 Gew.-% Einheiten ausgewählt aus den Formeln (I), wobei R² nicht H ist, und (III),
   0,1 bis 30 Gew.-%, bevorzugt 0,6 bis 20 Gew.-% und besonders bevorzugt 1 bis 15 Gew.-% Einheiten der Formel (VIII).

Das Copolymere kann in jedem Fall zusätzlich weitere Monomereinheiten enthalten, beispielsweise solche, die sich von Maleinsäurediestern, Fumarsäurediestern, Itaconsäureestern, Vinylacetat oder Ethen herleiten, solange die gewünschte haftvermittelnde Wirkung dadurch nicht wesentlich beeinträchtigt wird.

Der Haftvermittler kann in einer Ausführungsform ganz aus dem Copolymer bestehen; in einer Variante hiervon enthält das Copolymer einen Schlagzähmodifier, z. B. einen Acrylatkautschuk.

In einer zweiten Ausführungsform enthält der Haftvermittler 2 bis 99,9 Gew.-%, bevorzugt 3 bis 80 Gew.-%, besonders bevorzugt 4 bis 60 Gew.-% und insbesondere bevorzugt 5 bis 40 Gew.-% des Copolymeren sowie 0,1 bis 98 Gew.-%, bevorzugt 20 bis 97 Gew.-%, besonders bevorzugt 40 bis 96 Gew.-% und insbesondere bevorzugt 60 bis 95 Gew.-% ABS.

In einer dritten Ausführungsform enthält der Haftvermittler 2 bis 99,9 Gew.-%, bevorzugt 3 bis 80 Gew.-%, besonders bevorzugt 4 bis 60 Gew.-% und insbesondere bevorzugt 5 bis 40 Gew.-% des Copolymeren sowie 0,1 bis 98 Gew.-%, bevorzugt 20 bis 97 Gew.-%, besonders bevorzugt 40 bis 96 Gew.-% und insbesondere bevorzugt 60 bis 95 Gew.-% Polyamid. Gegebenenfalls ist zusätzlich ein Schlagzähmodifier wie z. B. ein EPM-Kautschuk enthalten.

In einer vierten Ausführungsform enthält der Haftvermittler 2 bis 99,8 Gew.-%, bevorzugt 3 bis 80 Gew.-%, besonders bevorzugt 4 bis 60 Gew.-% und insbesondere bevorzugt 5 bis 40 Gew.-% des Copolymeren sowie
0,1 bis 97,9 Gew.-%, bevorzugt 5 bis 92 Gew.-%, besonders bevorzugt 10 bis 86 Gew.-% und insbesondere bevorzugt 20 bis 75 Gew.-% ABS und zusätzlich
0,1 bis 97,9 Gew.-%, bevorzugt 5 bis 92 Gew.-%, besonders bevorzugt 10 bis 86 Gew.-% und insbesondere bevorzugt 20 bis 75 Gew.-% Polyamid.

Der Haftvermittler kann die üblichen Hilfs- und Zusatzstoffe wie z. B. Flaminschutzmittel, Stabilisatoren, Weichmacher, Verarbeitungshilfsmittel, Pigmente oder ähnliches enthalten. Die Menge der genannten Mittel ist so zu dosieren, dass die gewünschten Eigenschaften nicht ernsthaft beeinträchtigt werden.

Gegenstand der Erfindung sind weiterhin Mehrschichtfolien, die mindestens eine Schicht aus einer Polyamidformmasse sowie mindestens eine Schicht aus dem erfindungsgemäßen Haftvermittler enthalten, sowie Verbundteile, die aus einer solchen Mehrschichtfolie sowie einem Teil aus einer ABS-Formmasse zusammengesetzt sind.

Neben den erfindungsgemäß enthaltenen Schichten aus einer Polyamidformmasse und dem anspruchsgemäßen Haftvermittler kann die Folie, je nach Anwendung, weitere Schichten enthalten, beispielsweise eine substratseitige Stützschicht aus einer ABS-Formmasse, eine Farbschicht, eine Funktionsschicht, eine weitere Polyamidschicht und/oder eine Deckschicht bzw. einen Clearcoat.

Die Farbschicht kann eine Lackschicht sein; sie besteht aber, dem Stand der Technik entsprechend, bevorzugt aus einer eingefärbten Thermoplastschicht. Der Thermoplast kann ein Polyamid sein oder ein Polymeres, das mit Polyamid verträglich ist. Als Farbmittel können organische Farbstoffe oder anorganische bzw. organische Pigmente eingesetzt werden.

Die Funktionsschicht ist eine Schicht, die den anwendungstechnischen Erfordernissen entsprechend die Eigenschaften der Folie unabhängig von der Farbe positiv gestaltet, beispielsweise im Hinblick auf die mechanischen Eigenschaften oder die Beständigkeit, etwa gegenüber UV oder Wärme. Sie kann aus jeder beliebigen Formmasse bestehen, die die anwendungstechnischen Forderungen erfüllt und die erforderliche Haftung zu den benachbarten Schichten aufweist, beispielsweise aus Polyamid, Polyester oder Polycarbonat.
Der Clearcoat kann dem Stand der Technik entsprechend beispielsweise aus Polyamid, einem Acrylatpolymer, einem Fluorpolymer oder Mischungen daraus bestehen. Er soll die geforderten visuellen Oberflächeneigenschaften sicherstellen und die darunter liegenden Schichten schützen.

Beispiele für sinnvolle Schichtenkonfigurationen der erfindungsgemäßen Folie sind etwa:
PA / Haftvermittler (HV)
PA/HV/ABS
Funktionsschicht / PA / HV
Funktionsschicht / PA / HV / ABS
PA / Funkrionsschicht / PA / HV
PA / Funktionsschicht / PA / HV / ABS
Clearcoat / PA / Funktionsschicht / PA / HV
Clearcoat / PA / Funktionsschicht / PA / HV / ABS
Clearcoat / Funktionsschicht / PA / HV
Clearcoat / Funktionsschicht / PA / HV / ABS
Clearcoat / Farbschicht / PA / HV
Clearcoat / Farbschicht / PA / HV / ABS
Clearcoat / PA / HV
Clearcoat / PA / HV / ABS
Clearcoat / eingefärbtes PA / HV
Clearcoat / eingefärbtes PA / HV / ABS

Die Mehrschichtfolie kann beispielsweise durch Coextrusion oder Laminieren hergestellt werden, wobei sich gegebenenfalls gemäß dem Stand der Technik ein Verarbeitungsverfahren wie Umformen, Lackieren oder Oberflächenvergütung (etwa mittels Plasmabehandlung) anschließt.

Zusätzlich kann auf die fertige Mehrschichtfolie eine abziehbare Schutzfolie auflaminiert werden, die als Transport- oder Montageschutz wirkt und nach der Herstellung des Verbundteils abgezogen wird.
Die erfindungsgemäße Folie ist wegen der ausgewogenen Balance der einzelnen Eigenschaften besonders dafür geeignet, die Anforderungen zu erfüllen, die an Materialien für Dekorfolien im Bereich Automobil-Exterieur und Interieur gestellt werden. Durch den anspruchsgemäßen Haftvermittler wird eine verlässlich haftende Verbindung zwischen der Polyamidschicht und ABS als häufig anzutreffendem Substratmaterial sichergestellt. Dies gilt sowohl für Fälle, in denen ABS durch Hinterspritzen mit dem Haftvermittler in Kontakt gebracht wird, als auch für Fälle, in denen ABS auf den Haftvermittler aufextrudiert wird, beispielsweise in einer Coextrusion, oder wo der Verbund durch Pressen, Laminieren, Hinterpressen oder Hinterschäumen erzeugt wird. Eine Haftung bleibt auch dann gewährleistet, wenn die Folie vor dem Hinterspritzen einem Umformprozess, beispielsweise Thermoformen, ausgesetzt wird, oder wenn das Verbundteil nach der Herstellung umgeformt wird.

Die folgenden Beispiele sollen die Erfindung illustrieren. In den Beispielen wurden folgende Materialien eingesetzt:

### 1. Clearcoat:

- PA I:: Ein PA 12 mit einer relativen Lösungsviskosität ηᵣₑₗ, gemessen in einer 0,5-gew.-%igen Lösung in m-Kresol bei 23 °C gemäß ISO 307, von 2,1
- PA II:: RILSAN^{®} BESN TL, ein PA 11 der Firma Arkema mit einer relativen Lösungsviskosität ηᵣₑₗ von 2,1

### 2. Polyamidformmasse:

- PA III:: Mischung aus 20 Gew.-Teilen eines PA 12 mit einer relativen Lösungsviskosität ηᵣₑₗ von 2,1 und einem Überschuss an Aminoendgruppen, 80 Gew.-Teilen eines Polyetheresteramids auf Basis von PA 12 und Polytetrahydrofuran sowie 0,5 Gew.-Teilen Farbruß
- PA IV:: Mischung aus 20 Gew.-Teilen eines PA 12 mit einer relativen Lösungsviskosität ηᵣₑₗ von 1,9 und einem Überschuss an Carboxylendgruppen, 80 Gew.-Teilen eines Polyetheresteramids auf Basis von PA 12 und Polytetrahydrofuran sowie 2 Gew.-Teilen Aluminiumflitter
- PA V:: Mischung aus 100 Gew.-Teilen PA II und 2 Gew.-Teilen Aluminiumflitter

### 3. Haftvermittler:

- HV I:: Mischung aus 60 Gew.-Teilen TERLURAN^{®} GP22, einem ABS der BASF AG, und 40 Gew.-Teilen eines Copolymeren der Zusammensetzung

a) 57 Gew.-% Monomereinheiten der Formel 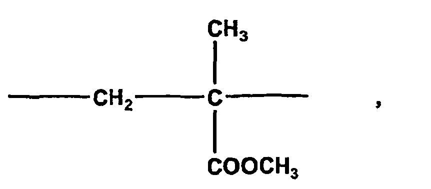
b) 30 Gew.-% Monomereinheiten der Formel 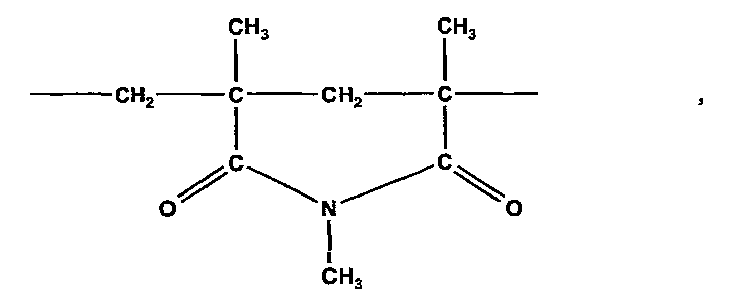
c) 3 Gew.-% Monomereinheiten der Formel 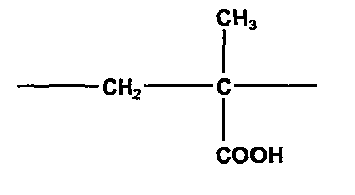 und
d) 10 Gew.-% Monomereinheiten der Formel

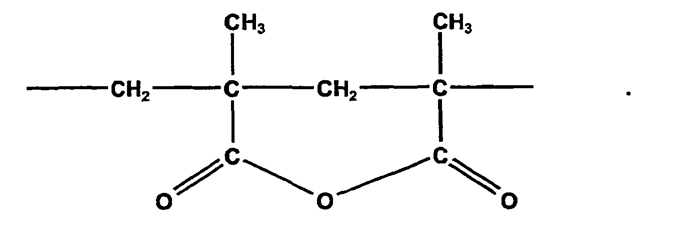

Das Copolymer, ein Polymethacrylimid, ist herstellbar durch Umsetzung einer Schmelze von Polymethylmethacrylat (PMMA) mit einer wässrigen Methylaminlösung, beispielsweise in einem Extruder.
- HV II:: Mischung aus 55 Gew.-Teilen eines PA 12 mit einer relativen Lösungsviskosität ηᵣₑₗ von 1,9 und einem Überschuss an Carboxylendgruppen und 45 Gew.-Teilen des gleichen Copolymers wie im HV I
- HV III:: Mischung aus 40 Gew.-Teilen TERLURAN^{®} GP22, 30 Gew.-Teilen des gleichen PA 12 wie im HV II und 30 Gew.-Teilen des gleichen Copolymers wie im HV I
- HV IV:: Mischung aus 50 Gew.-Teilen TERLURAN^{®} GP22, 25 Gew.-Teilen des gleichen PA 12 wie im HV II und 25 Gew.-Teilen des gleichen Copolymers wie im HV I
- HV V: (nicht erfindungsgemäß): Mischung aus 40 Gew.-Teilen TERLURAN^{®} GP22 und 60 Gew.-Teilen des gleichen PA 12 wie im HV II
- HV VI: (nicht erfindungsgemäß): Mischung aus 60 Gew.-Teilen TERLURAN^{®} GP22 und 40 Gew.-Teilen des gleichen PA 12 wie im HV II
- HV VII: (nicht erfindungsgemäß): Mischung aus 50 Gew.-Teilen TERLURAN^{®} GP22 und 50 Gew.-Teilen des gleichen PA 12 wie im HV II
- HV VIII:: Mischung aus 40 Gew.-Teilen TERLURAN^{®} GP22, 30 Gew.-Teilen PA II und 30 Gew.-Teilen des gleichen Copolymers wie im HV I

### 4. Hinterspritzmaterial:

### TERLURAN^{®} GP22G4nf, ein ABS der BASF AG mit 20 Gew.-% Glasfaser

Die Formmassen wurden mit einem Kneter des Typs Automatik ZCM 41/46 - 21D hergestellt, wobei die Massetemperatur 250°C, der Massedurchsatz 12 kg/h und die Drehzahl 250 min⁻¹ betrug.

Die Herstellung der Mehrschichtfolien erfolgte auf einer Anlage der Firma Collin mit einer Abzugsgeschwindigkeit von 2,5 m/min. Die extrudierten Einzelschichten wurden vereinigt und über einen Kalander gefahren. Die Folien hatten eine Breite von 24 cm.

Das Hinterspritzen geschah auf einer Maschine des Typs Engel ES600/150 mit einer Werkzeugtemperatur von 80 °C sowie einer Massetemperatur von 280 °C. Die Folie wurde dabei auf ein Format von 100 mm x 150 mm zugeschnitten und in ein Werkzeug (Platte 105 mm x 150 mm x 0,8 - 10 mm) eingelegt. Die Dicke der hinterspritzten Platte betrug einschließlich Folie 3 mm

Zur Ermittlung des Trennwiderstands als Maß für die Haftungsgüte des Verbundes zwischen Haftvermittlerschicht und Substrat wurde aus der Platte ein Prüfkörper der Maße 10 mm x 130 mm herausgestanzt und einem Peeltest unterworfen. Zur Ermittlung der Haftungsgüte innerhalb der Mehrschichtfolie wurde ein Probekörper mit gleichen Maßen aus der Mehrschichtfolie ausgestanzt und nach dem selben Muster verfahren. Beim Vorliegen guter Haftung zwischen den betrachteten Verbundpartnern wurde ein Ende des Prüfkörpers zwecks Antrennung 30 Minuten in heißem Polyethylenglykol gelagert. Nach erfolgter Antrennung wurde der Prüfkörper mit den zu trennenden Schichten im Winkel von 180° in die Spannfutter der Prüfmaschine eingespannt. Anschließend fuhren die Spannfutter mit einer Geschwindigkeit von 50 mm/min auseinander, und der Prüfkörper wurde dabei einer starken Schälbelastung ausgesetzt. Der Trennwiderstand, den der Verbund dieser Schälbelastung entgegenbrachte, wurde aufgezeichnet. Dies erfolgte, indem die zur Trennung notwendige Trennkraft in N gemessen wurde. Der Trennwiderstand wurde hieraus ermittelt, indem die gemessene Trennkraft durch Bildung des Quotienten ins Verhältnis zur Probenbreite gesetzt wurde. Die Probenbreite betrug in allen Fällen 10 mm, so dass der Trennwiderstand die Einheit N/mm trägt. Er gilt als ausreichend, wenn er mindestens 3 N/mm beträgt.

### Beispiele 1 bis 6 sowie Vergleichsbeispiele A bis C:

Der Aufbau der hergestellten Verbundteile sowie die Ergebnisse sind in der Tabelle 1 wiedergegeben.

**Tabelle 1: Aufbau der Verbundteile sowie Ergebnisse**

| Beispiel | 1 | 2 | 3 | 4 | A | B | C | 5 | 6 |
|---|---|---|---|---|---|---|---|---|---|
| Clearcoat (100 µm) | - | - | PA I | PA I | - | - | - | PA I | PA II |
| Polyamidschicht (200 µm) | PA III | PA IV | PA IV | PA III | PA IV | PA IV | PA IV | PA III | PA V |
| Haftvermittler (200 µm) | HV I | HV II | HV III | HV IV | HV V | HV VI | HV VII | HV III | HV VIII |
| ABS-Schicht (200 µm) (TERLURAN^{®} GP22) | - | - | - | - | - | - | - | + | - |
| Hinterspritzmaterial (= Substrat) | + | + | + | + | + | + | + | + | + |
| Haftung des Haftvermittlers zur Polyamidschicht [N/mm] | kT¹⁾ | kT¹⁾ | kT¹⁾ | kT¹⁾ | 2,8 | 0,1 | 0,5 | kT¹⁾ | kT¹⁾ |
| Haftung des Haftvermittlers zum Substrat bzw. zur ABS-Schicht [N/mm] | kT¹⁾ | 3,5 | kT¹⁾ | kT¹⁾ | kH²⁾ | 0,9 | kH²⁾ | kT¹⁾ | kT¹⁾ |

| | | | | | | | | | |
|---|---|---|---|---|---|---|---|---|---|
| ¹⁾ keine Trennung der Verbundpartner, stattdessen kohäsives Versagen der Folienschichten ²⁾ keine Haftung | | | | | | | | | |

## Patentansprüche

1. Verwendung eines Haftvermittlers zur Herstellung eines Verbundes zwischen
I. einer Schicht aus einer Polyamidformmasse und
II. einem Teil aus einer ABS-Formmasse,
**dadurch gekennzeichnet,**
**dass** der Haftvermittler 2 bis 100 Gew.-% eines Copolymeren enthält, welches folgende Monomereinheiten enthält:
a) 70 bis 99,9 Gew.-% an Monomereinheiten, die sich von vinylischen Verbindungen herleiten, die ausgewählt sind aus Acrylsäurederivaten und Methacrylsäurederivaten sowie
b) 0,1 bis 30 Gew.-% an Monomereinheiten, die eine funktionelle Gruppe enthalten, die ausgewählt ist aus einer Carbonsäureanhydridgruppe, einer Epoxidgruppe und einer Oxazolingruppe.

2. Verwendung gemäß Anspruch 1,
**dadurch gekennzeichnet,**
**dass** das Copolymer folgende Monomereinheiten enthält:
a) 70 bis 99,9 Gew.-% an Monomereinheiten, die ausgewählt sind aus Einheiten folgender Formeln: 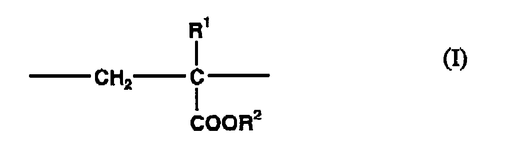 mit R¹ = H oder CH₃ und R² = H, Methyl, Ethyl, Propyl oder Butyl; 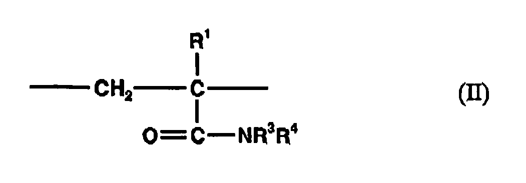 mit R¹ wie oben und R³ und R⁴, unabhängig voneinander, gleich H, Methyl oder Ethyl; 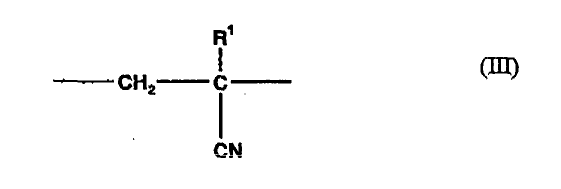 mit R¹ wie oben; 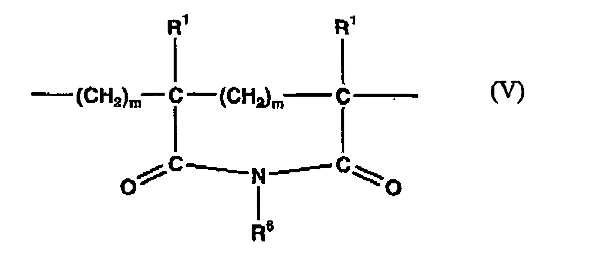 mit R¹ wie oben und R⁶ = H, Methyl, Ethyl, Propyl, Butyl oder Phenyl und m = 0 oder 1;
b) 0,1 bis 30 Gew.-% an Monomereinheiten, die ausgewählt sind aus Einheiten folgender
Formeln: 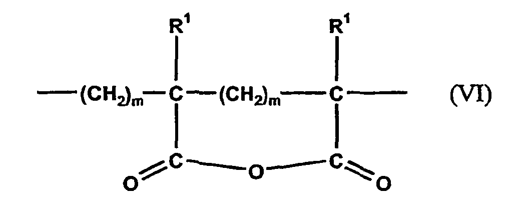 mit R¹ und m wie oben; 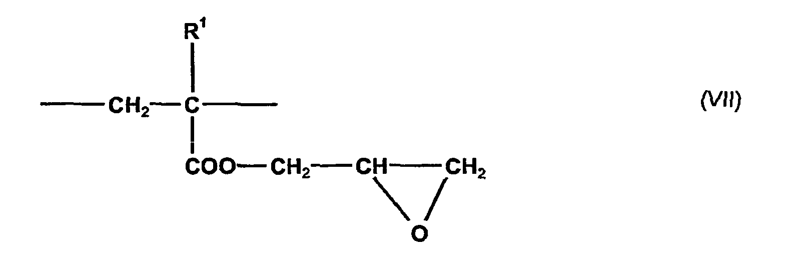 mit R¹ wie oben; 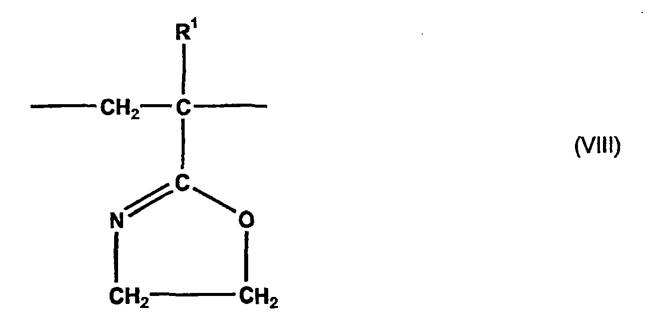 mit R¹ wie oben.

3. Verwendung gemäß einem der Ansprüche 1 und 2,
**dadurch gekennzeichnet,**
**dass** der Haftvermittler
2 bis 99,9 Gew.-% des Copolymeren und
0,1 bis 98 Gew.-% ABS
enthält.

4. Verwendung gemäß einem der Ansprüche 1 und 2,
**dadurch gekennzeichnet,**
**dass** der Haftvermittler
2 bis 99,9 Gew.-% des Copolymeren und
0,1 bis 98 Gew.-% Polyamid
enthält.

5. Verwendung gemäß einem der Ansprüche 1 und 2,
**dadurch gekennzeichnet,**
**dass** der Haftvermittler
2 bis 99,8 Gew.-% des Copolymeren,
0,1 bis 97,9 Gew.-% ABS und
0,1 bis 97,9 Gew.-% Polyamid
enthält.

6. Mehrschichtfolie, die folgende Schichten enthält:
- Mindestens eine Schicht aus einer Polyamidformmasse sowie
- mindestens eine Schicht aus dem Haftvermittler gemäß einem der Ansprüche 1 bis 5.

7. Mehrschichtfolie gemäß Anspruch 6,
**dadurch gekennzeichnet,**
**dass** sie eine oder mehrere weitere Schichten enthält, die ausgewählt sind aus einer ABS-Schicht, einer weiteren Polyamidschicht, einer Farbschicht, einer Funktionsschicht und einem Clearcoat.

8. Verfahren zur Herstellung einer Mehrschichtfolie gemäß einem der Ansprüche 6 und 7,
**dadurch gekennzeichnet,**
**dass** die Mehrschichtfolie durch Coextrusion oder Laminieren sowie ein gegebenenfalls sich anschließendes Verarbeitungsverfahren hergestellt wird.

9. Verbundteil, das zusammengesetzt ist aus
- einer Mehrschichtfolie gemäß einem der Anspruche 6 und 7 und
- einem Teil aus einer ABS-Formmasse.

10. Verbundteil gemäß Anspruch 9,
**dadurch gekennzeichnet,**
**dass** die ABS-Formmasse weitere Thermoplaste als Bestandteile enthält.

11. Verbundteil gemäß einem der Ansprüche 9 und 10,
**dadurch gekennzeichnet,**
**dass** das Teil aus einer ABS-Formmasse flächig ausgeformt ist.

12. Verbundteil gemäß einem der Ansprüche 9 bis 11,
**dadurch gekennzeichnet,**
**dass** es ein Karosserieteil eines Automobils, eine Verkleidung, eine Zierleiste, eine Blendleiste, eine Blende oder ein Dekorationselement ist.

13. Verfahren zur Herstellung eines Verbundteils gemäß einem der Ansprüche 9 bis 12,
**dadurch gekennzeichnet,**
**dass** das Verbundteil durch Hinterspritzen, Coextrusion, Pressen, Laminieren, Hinterpressen oder Hinterschäumen sowie gegebenenfalls durch nachfolgendes Umformen hergestellt wird.

## Claims

1. Use of an adhesion promoter for production of a bond between
I. a layer composed of a polyamide molding compound, and
II. a part composed of an ABS molding composition,
**characterized in that**
the adhesion promoter
comprises from 2 to 100% by weight of a copolymer which contains the following monomer units:
a) from 70 to 99.9% by weight of monomer units which derive from vinyl compounds selected from acrylic acid derivatives and methacrylic acid derivatives, and also
b) from 0.1 to 30% by weight of monomer units which contain a functional group selected from a carboxylic anhydride group, an epoxy group, and an oxazoline group.

2. Use according to Claim 1,
**characterized in that**
the copolymer contains the following monomer units:
a) from 70 to 99.9% by weight of monomer units selected from units of the following formulae: 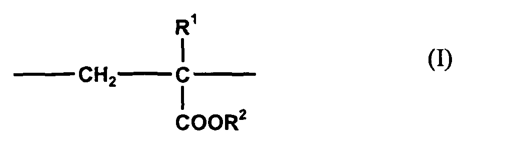 where R¹ = H or CH₃ and R² = H, methyl, ethyl, propyl or butyl; 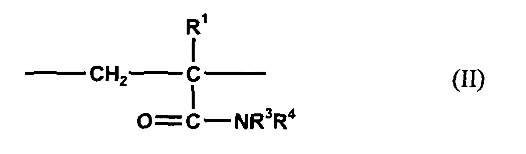 where R¹ is as above and R³ and R⁴, independently of one another, are identically H, methyl or ethyl; 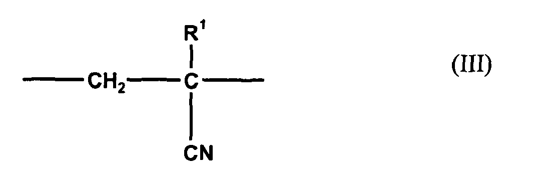 where R¹ is as above; 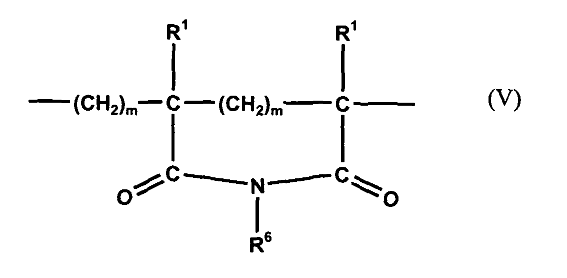 where R¹ is as above and R⁶ = H, methyl, ethyl, propyl, butyl or phenyl, and m = 0 or 1;
b) from 0.1 to 30% by weight of monomer units selected from units of the following formulae: 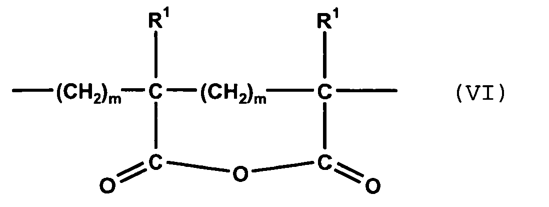
where R¹ and m are as above; 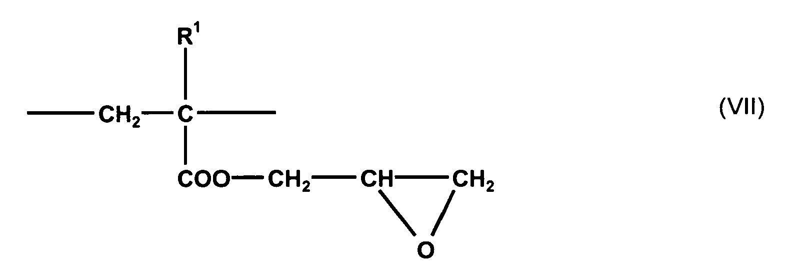 where R¹ is as above; 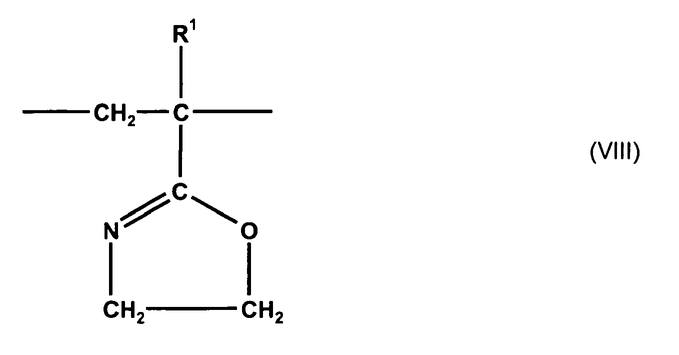 where R¹ is as above.

3. Use according to Claim 1 or 2,
**characterized in that**
the adhesion promoter comprises
from 2 to 99.9% by weight of the copolymer, and
from 0.1 to 98% by weight of ABS.

4. Use according to Claim 1 or 2,
**characterized in that**
the adhesion promoter comprises
from 2 to 99.9% by weight of the copolymer, and
from 0.1 to 98% by weight of polyamide.

5. Use according to Claim 1 or 2,
**characterized in that**
the adhesion promoter comprises
from 2 to 99.8% by weight of the copolymer,
from 0.1 to 97.9% by weight of ABS, and
from 0.1 to 97.9% by weight of polyamide.

6. Multilayer foil which comprises the following layers:
- at least one layer composed of a polyamide molding composition, and also
- at least one layer composed of the adhesion promoter according to any of Claims 1 to 5.

7. Multilayer foil according to Claim 6,
**characterized in that**
it comprises one or more other layers selected from an ABS layer, another polyamide layer, a color layer, a functional layer, and a clearcoat.

8. Process for production of a multilayer foil according to Claim 6 or 7,
**characterized in that**
the multilayer foil is produced via coextrusion or lamination, and also via a process which follows, if appropriate.

9. Composite part composed of
- a multilayer film according to claim 6 or 7, and
- a part composed of an ABS molding composition.

10. Composite part according to Claim 9,
**characterized in that**
the ABS molding composition comprises other thermoplastics as constituents.

11. Composite part according to Claim 9 or 10,
**characterized in that**
the part composed of an ABS molding composition has been shaped in the form of a sheet.

12. Composite part according to any of Claims 9 to
11,
**characterized in that**
it is a bodywork part of an automobile, is a cladding, is a decorative strip, is a cover strip, is a panel, or is a decorative element.

13. Process for production of a composite part according to any of Claims 9 to 12,
**characterized in that**
the composite part is produced via coextrusion, pressing, lamination, or via reverse coating by an injection-molding, compression-molding, or foaming method, and also, if appropriate, via subsequent forming.

## Revendications

1. Utilisation d'un promoteur d'adhésion pour la réalisation d'une liaison entre :
I. une couche constituée d'une masse moulée de polyamide et
II. une partie constituée d'une masse moulée d'ABS,
**caractérisée en ce que :**
le promoteur d'adhésion contient 2 à 100 % en poids d'un copolymère, qui contient les unités monomère suivantes :
a) 70 à 99,9 % en poids d'unités monomère, qui dérivent de composés vinyliques, sélectionnés parmi des dérivés d'acide acrylique et des dérivés d'acide méthacrylique ainsi que
b) 0,1 à 30 % en poids d'unités monomère, qui contiennent un groupe fonctionnel sélectionné parmi un groupe anhydride d'acide carboxylique, un groupe époxyde et un groupe oxazoline.

2. Utilisation selon la revendication 1,
**caractérisée en ce que :**
le copolymère contient les unités monomère suivantes :
a) 70 à 99,9 % en poids d'unités monomère, choisies parmi des unités des formules suivantes : 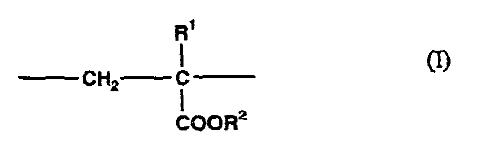 avec R¹ = H ou CH₃ et R² = H, méthyle, éthyle, propyle ou butyle ; 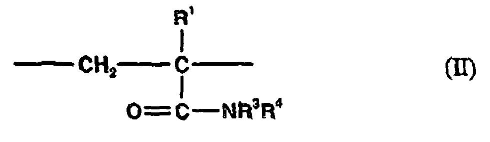 avec R¹ comme ci-dessus et R³ et R⁴ signifiant indépendamment l'un de l'autre H, méthyle ou éthyle ; 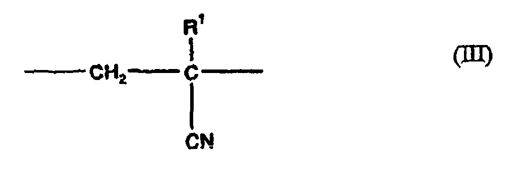 avec R¹ comme ci-dessus ; 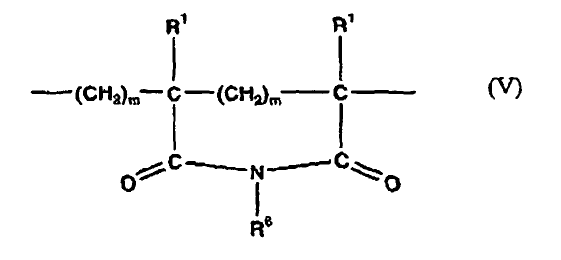 avec R¹ comme ci-dessus et R⁶ = H, méthyle, éthyle, propyle, butyle ou phényle et m = 0 ou 1 ;
b) 0,1 à 30 % en poids d'unités monomère, choisies parmi des unités des formules suivantes : 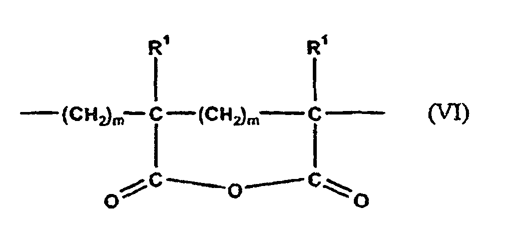 avec R¹ et m comme ci-dessus ; 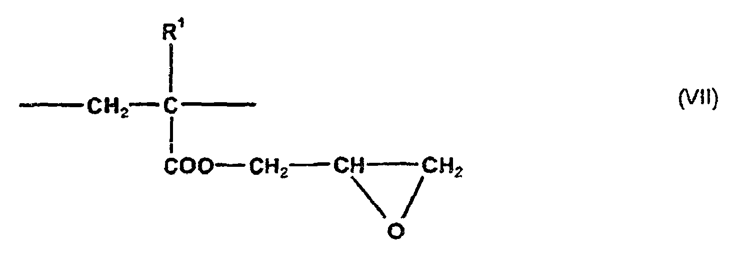 avec R¹ comme ci-dessus ; 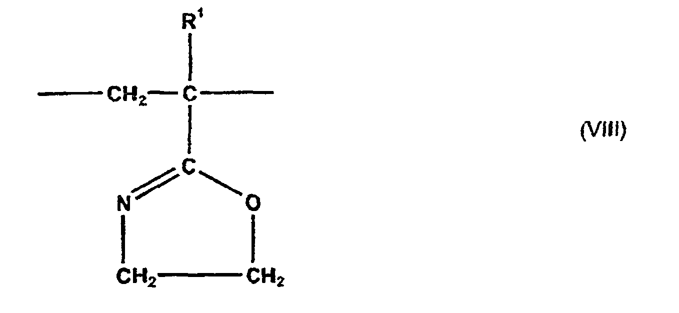 avec R¹ comme ci-dessus.

3. Utilisation selon l'une quelconque des revendications 1 et 2,
**caractérisée en ce que :**
le promoteur d'adhésion contient :
2 à 99,9 % en poids du copolymère et
0,1 à 98 % en poids d'ABS.

4. Utilisation selon l'une quelconque des revendications 1 et 2,
**caractérisée en ce que :**
le promoteur d'adhésion contient :
2 à 99,9 % en poids du copolymère et
0,1 à 98 % en poids de polyamide.

5. Utilisation selon l'une quelconque des revendications 1 et 2,
**caractérisée en ce que :**
le promoteur d'adhésion contient :
2 à 99,8 % en poids du copolymère,
0,1 à 97,9 % en poids d'ABS et
0,1 à 97,9 % en poids de polyamide.

6. Feuille multicouche, qui contient les couches suivantes :
- au moins une couche constituée d'une masse moulée de polyamide ainsi que
- au moins une couche constituée du promoteur d'adhésion selon l'une quelconque des revendications 1 à 5.

7. Feuille multicouche selon la revendication 6,
**caractérisée en ce que :**
elle contient une ou plusieurs autres couches, choisies parmi une couche ABS, une autre couche de polyamide, une couche colorée, une couche fonctionnelle et un enduit lustré.

8. Procédé de fabrication d'une feuille multicouche selon l'une quelconque des revendications 6 et 7,
**caractérisé en ce que :**
la feuille multicouche est fabriquée par coextrusion ou laminage ainsi que par un procédé de transformation éventuellement consécutif.

9. Pièce composite, qui se compose:
- d'une feuille multicouche selon l'une quelconque des revendications 6 et 7 et
- d'une pièce constituée d'une masse moulée d'ABS.

10. Pièce composite selon la revendication 9,
**caractérisée en ce que :**
la masse moulée d'ABS contient d'autres matières thermoplastiques en tant que composants.

11. Pièce composite selon l'une quelconque des revendications 9 et 10,
**caractérisée en ce que :**
la pièce est démoulée en nappe à partir d'une masse moulée d'ABS.

12. Pièce composite selon l'une quelconque des revendications 9 à 11,
**caractérisée en ce que :**
elle est une pièce de carrosserie d'une automobile, un carénage, une baguette décorative, un pare-soleil, un écran ou un élément de décoration.

13. Procédé de fabrication d'une pièce composite selon l'une quelconque des revendications 9 à 12,
**caractérisé en ce que :**
la pièce composite est fabriquée par surmoulage par injection, coextrusion, moulage par compression, laminage, surmoulage par compression ou surmoulage par application de mousse ainsi qu'éventuellement par un déformage consécutif.
